Europäisches Patentamt

European Patent Office

Office européen des brevets

(19)

(11) Numéro de publication: **0 068 916
B1**

(12) # FASCICULE DE BREVET EUROPEEN

(45) Date de publication du fascicule du brevet:
02.01.85

(51) Int. Cl.³: **C 02 F 11/12,** C 02 F 3/26,
C 02 F 3/20

(21) Numéro de dépôt: **82400932.8**

(22) Date de dépôt: **19.05.82**

(54) **Procédé et installation de traitement des boues issues d'une épuration d'eaux usées.**

(30) Priorité: **25.05.81 FR 8110315**

(43) Date de publication de la demande:
**05.01.83 Bulletin 83/1**

(45) Mention de la délivrance du brevet:
**02.01.85 Bulletin 85/1**

(84) Etats contractants désignés:
**AT BE CH DE FR GB IT LI LU NL SE**

(56) Documents cités:
**DE - A - 2 737 806
FR - A - 2 366 228
FR - A - 2 441 586
GB - A - 1 497 105
US - A - 1 385 701
US - A - 2 069 989**

(73) Titulaire: **L'AIR LIQUIDE, SOCIETE ANONYME POUR
L'ETUDE ET L'EXPLOITATION DES PROCEDES
GEORGES CLAUDE, 75, Quai d'Orsay, F-75321 Paris
Cedex 07 (FR)**

(72) Inventeur: **Jamonet, Bernard, Cratuzange, Le Goulet,
F-26100 Bourg-de-Péage (FR)**
Inventeur: **Rigouard, Alain, 12, Allée François Villon
Domaine Jean Jaurès, F-38130 Echirolles (FR)**
Inventeur: **Bouchez, Jean-Pierre, Pré de l'Achard,
F-38330 Les Eymes (FR)**
Inventeur: **Duc, Jean, 1, Promenade Mona Lisa,
F-78000 Versailles (FR)**

(74) Mandataire: **Leclercq, Maurice et al, L'AIR LIQUIDE
SOCIETE ANONYME POUR L'ETUDE ET
L'EXPLOITATION DES PROCEDES GEORGES
CLAUDE 75, Quai d'Orsay, F-75321 Paris Cedex 07 (FR)**

## Description

L'invention concerne une installation de traitement des boues issues d'un bassin d'épuration d'eaux usées, du genre comportant un épaississeur de boues à cuve cylindro-conique équipée d'une herse à racloir de radier tournant lentement autour d'un arbre vertical, dans laquelle se séparent une boue concentrée en zone inférieure d'épaississeur et un surnageant en zone supérieure d'épaississeur.

Lors de cette opération d'épaississement, et notamment dans le cas de boues organiques fermentescibles, les épaississeurs sont souvent le siège de dégagements d'odeurs nauséabondes et voient parfois leur bon fonctionnement correct perturbé par les réactions de fermentation, ce qui conduit, pour l'étape suivante de déshydratation, à la mise en œuvre d'importantes quantités de réactifs de coagulation et de floculation. Dans la DE-A-2 737 806, on a déjà proposé d'assurer dans les décanteurs primaires une oxygénation du surnageant par dissolution d'oxygène industriel qui est effectuée par prélèvement du surnageant que l'on transfère dans un poste d'oxygénation industriel, et que l'on réinjecte dans le surnageant. Cependant, les dispositifs proposés sont tout à fait inaptes, parce que trop rudimentaires, à résoudre le double problème d'une oxygénation poussée du surnageant et d'un maintien à l'état presque totalement calme de la zone inférieure, c'est-à-dire des boues en cours d'épaississement. Ce double objectif est atteint, selon l'invention, en ce que l'épaississeur comprend un moyen, connu en soi, de prélèvement de surnageant vers un poste d'oxygénation et un moyen de réinjection du surnageant oxygéné, ladite réinjection de surnageant oxygéné s'effectuant au moyen de diffuseurs à jupe répartis en surface, de façon à ne provoquer que des mouvements lents dans la zone du surnageant.

L'invention sera maintenant décrite en référence aux dessins annexés dans lesquels:

— la figure 1.est une vue schématique de dessus d'une installation selon l'invention;

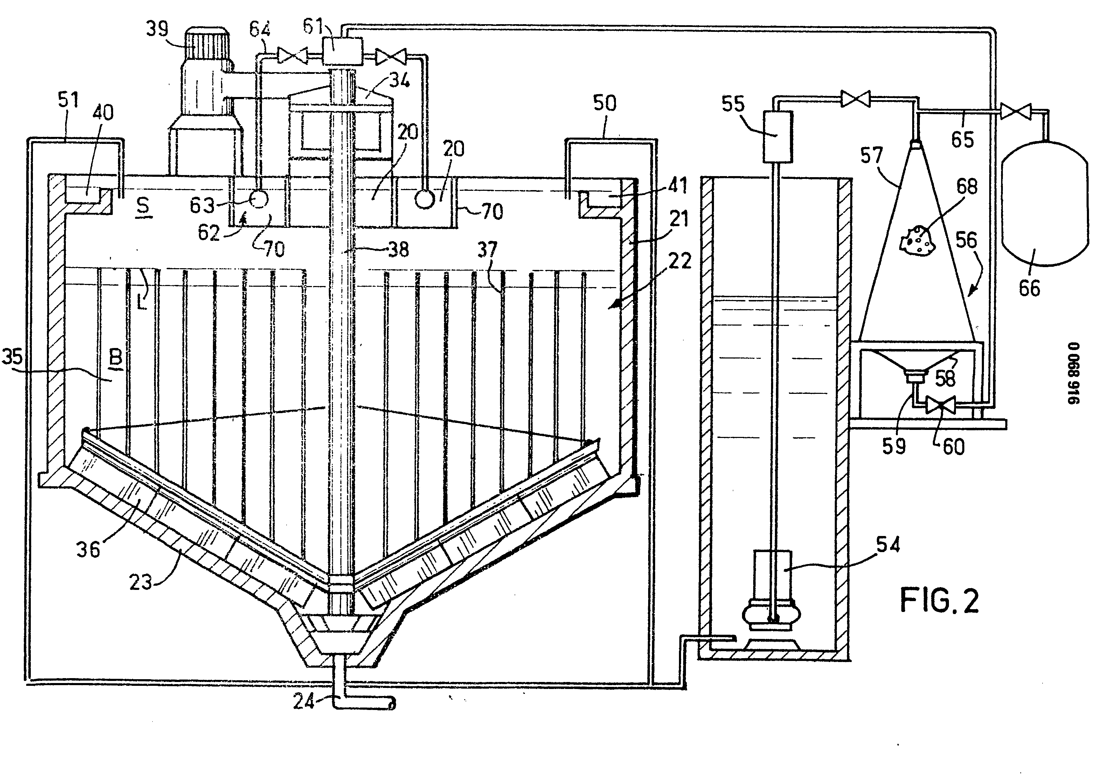

— la figure 2 est une coupe axiale d'un épaississeur.

En se référant aux dessins annexés, une installation de traitement de boues fraîches provenant par exemple de clarificateurs floculateurs 1 et 2 alimentés en eaux usées en 3 et 4 et fournissant des effluents épurés 5 et 6 comprend un puits à boues 10 alimenté en boues fraîches à partir des clarificateurs 1 et 2 via des canalisations 11 et 12 incorporant des vannes pneumatiques 13 et 14. Des pompes 15 et 16 immergées dans le puits 10 refoulent les boues via une canalisation 18 vers un bac d'alimentation 19 qui lui-même délivre la boue dans un répartiteur 20 axialement disposé dans une cuve 21 d'un épaississeur 22, qui comporte un radier de cuve 23 de forme cônique convergente vers le bas, où les boues épaissies sont prélevées en 24 pour être transférées par pompe 44 vers un bac de floculation 25 équipé d'un alimentateur en chlorure ferrique 26 et d'un alimentateur en chaux 27, les boues ainsi floculées étant dirigées ensuite par une canalisation 28 vers un filtre-presse 29. Les boues ainsi pressées sont transférées en 30 vers un incinérateur 31, les produits d'incinération étant déchargés ensuite en 32.

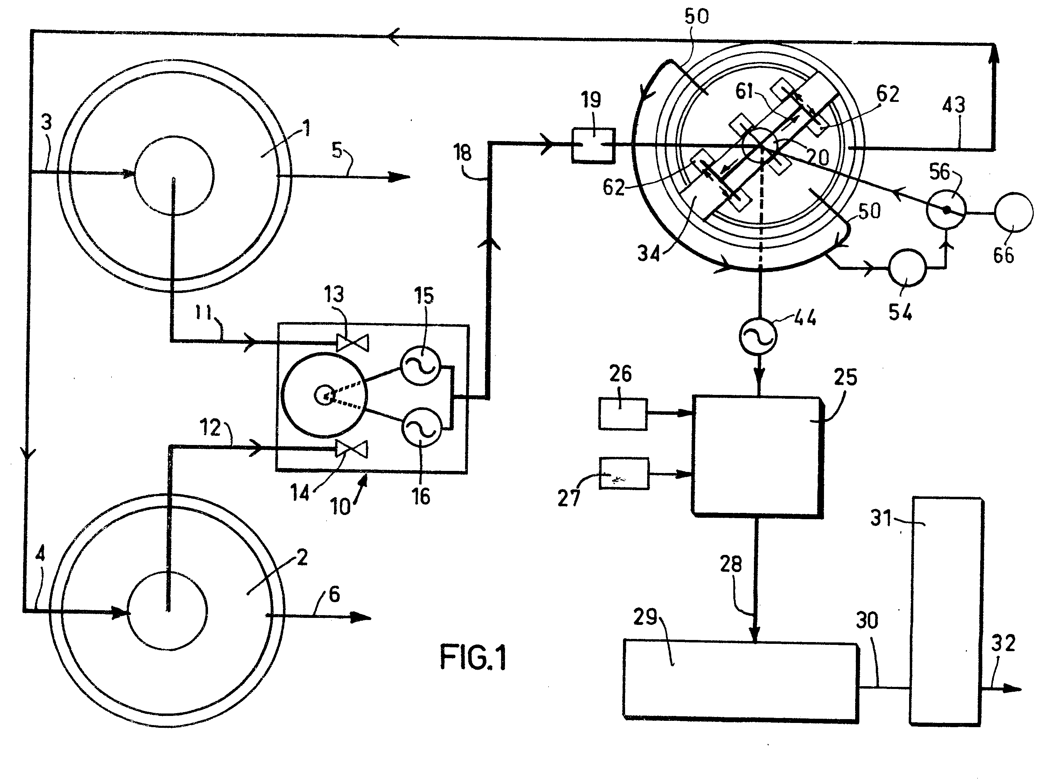

De façon usuelle, l'épaississeur 22 comporte, monté sur une poutre-support transversale 34, un dispositif rotatif 35 à extension verticale et formant, dans une zone inférieure, râcloir de radier 36 et présentant dans un plan diamétral une pluralité de bras verticaux 37 formant une sorte de herse, le tout supporté par un arbre vertical 38 entraîné à faible vitesse de rotation par un moteur réducter 39. De façon usuelle également, l'épaississeur 22 est équipé de goulottes déverseuses 40—41 pour le soutirage d'une partie du surnageant, qui est recyclé via une canalisation 43 en tête des clarificateurs 1 et 2 (fig. 1).

Selon l'invention, on a équipé l'épaississeur ainsi décrit d'un dispositif d'oxygénation de surnageant, qui comporte essentiellement une pluralité de conduites de prélèvement 50 et 51 aboutissant en des zones hautes et périphériques de l'épaississeur 22 et raccordées à une pompe à vitesse variable 54 délivrant le surnageant via un débimètre 55 en tête d'un appareil d'oxygénation du type »bicône« 56 formé d'une partie amont de forme divergente vers le bas 57 et d'une partie aval très convergente vers le bas 58, dont le sommet inférieur est raccordé via une canalisation 59 à vanne 60 à un répartiteur de tête 61 pour la réintroduction dans l'épaississeur du surnageant, ce répartiteur 61 alimentant une série de diffuseurs 62, agencés tout au long et de part et de l'autre de la poutre-support 34, chaque diffuseur 62 étant formé d'un distributeur 63, chacun alimenté à partir du répartiteur 61 par une conduite 64 et placé au centre d'une jupe 70 à extension verticale depuis le niveau du surnageant jusqu'à environ la moitié de la hauteur du surnageant S, et l'on note que les zones de prélèvement du surnageant par les conduits 50 et 51 sont le plus éloigné possible des diffuseurs à jupe, c'est-à-dire ici de la poutre-support 34. De façon bien connue en soi le »bicône« 56 est alimenté en tête par une conduite 65 à partir d'une source d'oxygène industriel 66 et cet oxygène forme dans la partie divergente 57 un nuage de bulles 68, dont au moins la partie basse est quasi stationnaire, étant donné la réduction progressive de la vitesse du surnageant dans son mouvement descentionnel.

L'expérience montre que l'agencement décrit permet une bonne oxygénation du surnageant S qui est séparé de la boue B en cours d'épaississement par une délimitation assez nette L. Il se produit dans les jupes des mouvements descentionnels lents du surnageant qui se transforment, à l'extrémité inférieure des jupes en mouvements horizontaux vers la périphérie (reprise par les conduits 50 et 51). Cette zone de surnageant ainsi oxygénée constitue pour les odeurs nauséabondes développées dans la boue B une barrière infranchissable sans pour autant perturber l'opération d'épaississement.

Bien que l'on puisse oxygéner avec des concentrations d'oxygène dissous relativement élevées, il est avantageux de limiter cette concentration à un faible niveau pour assurer une consommation minimale d'oxygène; une valeur convenable se situe aux alentours de 1 mg/l, alors que la teneur en oxygène dissout dans le »bicône« peut atteindre 15 mg/l.

Dans un autre exemple de réalisation qui a été mis en œuvre pratiquement, on a utilisé pour un épaississeur 22 recevant un débit de boues à épaissir de 30 m³/h, quatre diffuseurs 62 avec un débit de surnageant de 100 m³/h également répartis dans les diffuseurs 62. Il résulte de l'oxygénation du surnageant une désodorisation totale de l'ouvrage et une amélioration très importante de l'épaississement des boues, matérialisée par la durée nécessaire à leur déshydratation qui s'effectue dans le filtre, et cette durée de déshydratation passe de 2 h 30 mn (sans oxygénation) à 1 h 30 mn (avec oxygénation). D'autre part, il résulte de cette oxygénation de surnageant une économie substantielle de réactifs chimiques utilisés dans le bac de floculation et, à titre d'exemple, on a constaté que le taux de réactifs utilisé passe de 12% à 4% par rapport au poids de matières sèches traitées.

Un mode d'oxygénation préalable des boues est suggéré par les revendications 5 et 7.

La présente invention a pour domaine d'application l'épaississement dans toute station d'épuration recevant des boues primaires, ou fournissant des boues secondaires, des boues cuites après traitement thermiques, etc..., ainsi que les fosses à lisier des élevages porcins.

## Revendications

1. Installation de traitement des boues issues d'un bassin d'épuration d'eaux usées, du genre comportant un épaississeur de boues à cuve cylindro-conique, équipée d'une herse à racloir de radier tournant lentement autour d'un arbre vertical, dans laquelle se séparent une boue concentrée en zone inférieure d'épaississeur et un surnageant en zone supérieure d'épaississeur, caractérisée en ce qu'elle comprend un moyen connu en soi de prélèvement de surnageant vers un poste d'oxygénation et un moyen de réinjection du surnageant oxygéné, ladite réinjection du surnageant oxygéné s'effectuant au moyen de diffuseurs à jupe répartis en surface, de façon à ne provoquer que des mouvements lents dans la zone du surnageant.

2. Installation de traitement de boues selon la revendication 1, du genre où le râcloir de radier est à arbre rotatif axialement agencé dans la cuve équipée d'une poutre-support transversale, caractérisée en ce que les diffuseurs à jupe s'étendent le long et de part et d'autre de la dite poutre-support transversale.

3. Installation de traitement des boues selon la revendication 1, caractérisée en ce que les jupes des diffuseurs s'étendent verticalement depuis la surface du surnageant jusqu'à environ la moitié de la hauteur de surnageant.

4. Installation de traitement de boues selon la revendication 2, caractérisée en ce que les moyens de prélèvement (50) sont agencés dans deux zones périphériques les plus éloignées de la poutre support.

5. Installation de traitement des boues selon l'une quelconque des revendications 1 ou 4, caractérisée par un poste de dissolution d'oxygène industriel dans les boues en amont de l'épaississeur.

6. Installation de traitement des boues selon l'une quelconque des revendications 1 à 4, caractérisée en ce que l'oxygène est assuré dans un appareil du type »bicône« à partie amont divergeant vers le bas formant un nuage quasi-stationnaire de bulles d'oxygène en cours de dissolution.

7. Installation de traitement des boues selon la revendication 5, caractérisée en ce que le poste d'oxygénation préalable des boues est assuré dans un puits ménagé entre le bassin de traitement des eaux usées et l'épaississeur des boues.

## Patentansprüche

1. Anlage für die Behandlung von Schlämmen aus einem Abwasserklärbecken mit einem Schlammeindicker mit zylindrisch-konischem Becken, das mit einem Sohlenabstreicherrechen ausgestattet ist, der sich langsam um eine senkrechte Welle dreht, wobei sich in der Anlage in der unteren Zone des Eindickers ein konzentrierter Schlamm und in der oberen Zone des Eindickers ein Schwimmschlamm trennen, dadurch gekennzeichnet, daß die Anlage ein an sich bekanntes Entnahmemittel für Schwimmschlamm zu einer Oxidierungsanlage und ein Wiedereinführmittel für oxidierten Schwimmschlamm aufweist, wobei das Wiedereinführen des oxidierten Schwimmschlamms mittels schürzen- bzw. glockenformiger Diffusoren, die auf der Oberfläche verteilt sind, derart ausgeführt wird, daß nur langsame Bewegungen in der Zone des Schwimmschlamms hervorgerufen werden.

2. Anlage für die Behandlung von Schlämmen nach Anspruch 1, bei welcher der Sohlenabstreicher eine in dem mit einem Querträger ausgestatteten Becken axial drehbar angeordnete Welle ist, dadurch gekennzeichnet, daß die schürzenförmigen Diffusoren sich längs und beiderseitig des Querträgers erstrecken.

3. Anlage zur Behandlung von Schlämmen nach Anspruch 1, dadurch gekennzeichnet, daß sich die Glocken der Diffusoren vertikal von der Oberfläche des Schwimmschlamms bis etwa zur Mitte der Höhe des Schwimmschlamms erstrecken.

4. Anlage zur Behandlung von Schlämmen nach Anspruch 2, dadurch gekennzeichnet, daß die Entnahmemittel (50) in zwei vom Träger am weitesten entfernten Umfangszonen angeordnet sind.

5. Anlage zur Behandlung von Schlämmen nach einem der Ansprüche 1 oder 4, gekennzeichnet durch eine Anlage zum Auflösen von Industriesauerstoff in den Schlämmen aufstromig von dem Eindicker.

6. Anlage zur Behandlung von Schlämmen nach einem der Ansprüche 1 bis 4, dadurch gekennzeichnet, daß Sauerstoff in einem Apparat von der »bikonischen« Art vorgesehen ist mit einem aufstromigen Teil, welches nach unten hin divergiert und im Verlauf des Auflösens eine quasi stationäre Sauerstoffbläschenwolke bildet.

7. Anlage zur Behandlung von Schlämmen nach Anspruch 5, dadurch gekennzeichnet, daß die Anlage zur vorhergehenden Oxidierung von Schlämmen in einem Schacht vorgesehen ist, der zwischen dem Behandlungsbecken für Abwasser und dem Schlammeindicker angeordnet ist.

**Claims**

1. Installation for the treatment of sludge originating from a waste water purification basin, of the kind comprising a sludge thickener with a cylindric conical trough, equipped with a bottom scraping rake, slowly turning around a vertical shaft, in which trough a concentrated sludge in the inferior zone of the thickener separates from a floating sludge in the superior zone of the thickener, characterized in that it comprises means known per se for discharging the floating sludge towards an oxygenation system and reinjection means for oxygenous floating sludge, this reinjection of the oxygenous floating sludge is effected by means of jacket diffusers spread on the surface such that it only provokes slow movement in the zone of the floating sludge.

2. Installation for the treatment of sludges according to claim 1, of the type where the bottom rake is a rotatable shaft axially mounted in the trough, equipped with a transversal support, characterized by that the jacket diffusers extend lengthwise and on both sides of the said transversal support.

3. Installation for the treatment of sludges according to claim 1, characterized by that the jacket diffusers extend vertically from the surface of the floating sludge approximately to the middle of the height of the floating sludge.

4. Installation for the treatment of sludges according to claim 2, characterized by that the discharge means (50) are mounted in two peripheral zones located farest from the support.

5. Installation for the treatment of sludges according to one of the claims 1 or 4, characterized by a dissolution system for industrial oxygen in the sludges upstream of the thickener.

6. Installation for the treatment of sludges according to one of the claims 1 to 4, characterized by that oxygen is secured in an apparatus of the »biconous« type with an upstream part diveraing downwards forming a quasi-stationary cloud of oxygen bubbles during dissolution.

7. Installation for the treatment of sludges according to claim 5, characterized by that the preliminary oxygenation system of the sludges is secured in a well positioned between the basin for the treatment of waste water and the sludge thickener.

FIG.1

0 068 916

FIG.2